# EUROPEAN PATENT APPLICATION

(11) **EP 4 814 798 A1**
(43) Date of publication of application: **30.09.2026**
(21) Application number: 26166087.2
(22) Date of filing: 19.03.2026
(51) Int. Cl.: G06N 3/0495, G06N 3/084

(54) **MIXED PRECISION TRANSFORMER WITH INTEGER MULTIPLY ACCUMULATE**

(30) Priority: 28.03.2025 US 202563780053 P; 08.09.2025 US 202519322393
(71) Applicant: Tesla, Inc., Austin, TX 78725 (US)
(72) Inventor: RAWAT, Ritvik, Austin, Texas, 78725 (US); ROTAN, Valeriy, Austin, Texas, 78725 (US); SINGH, Alex, Austin, Texas, 78725 (US); SAMPATHKUMAR, Srihari, Austin, Texas, 78725 (US)
(74) Representative: Liesegang, Eva

(57) **Abstract**

Embodiments include systems and methods for processing sensor data and generating operational instructions for automated devices. The automated device includes hardware (e.g., INT8 MAC units, FP32 SIMD processors) and software operations executing a machine-learning architecture having transformer architectures implementing mixed-precision quantization for ingesting and analyzing various types of sensor data. The machine-learning architecture implements a transformer that includes dynamic quantization layers that dynamically quantize tensors, per-token, for downstream operations of the transformer and machine-learning architecture.

## Description

### CROSS-REFERENCE TO RELATED APPLICATION

This application claims priority to U.S. Provisional Application No. 63/780,053, filed March 28, 2025, which is incorporated by reference in its entirety.

### TECHNICAL FIELD

The present application relates generally to neural network architecture for automated devices, and more specifically to a system and method for processing sensor data and for automated devices.

### BACKGROUND

Transformer architectures play a significant role in applications such as signal processing, robotics, autonomous vehicles, computer vision, and object recognition. Despite the importance of transformers, several challenges impede the effectiveness in various settings.

Adapting to dynamic input ranges presents a notable challenge for transformer models. Quantization errors further complicate their application, leading to reduced accuracy. Memory bandwidth limitations restrict data transfer rates, thereby hindering performance. High power consumption remains a persistent issue, affecting efficiency. Specialized hardware platforms often exhibit suboptimal performance when running transformer-based models. The lack of flexibility across different models limits adaptability. Maintaining high precision in residual streams is another concern, impacting model reliability. Complexity in generating quantization scale factors adds an additional layer of difficulty.

To address these issues, advanced and efficient quantization frameworks are required to enhance the performance of transformer-based models on specialized hardware platforms.

### SUMMARY

Disclosed herein is a mixed-precision quantization framework for transformer architectures, addressing several technological shortcomings, by optimizing for accelerators equipped with, for example, integer Multiply-Accumulate (MAC) units and Single Instruction, Multiple Data (SIMD) processors, such as 4-bit integer (INT4), 8-bit integer (INT8), or 16-bit integer (INT16) MAC units, and 32-bit floating point (FP32) SIMD processors. The machine-learning architecture implementing a transformer includes dynamic quantization layers that dynamically quantize tensors per token or per channel, adapting to varying input ranges and preserving model accuracy with efficiency-focused quantization. This framework enhances memory bandwidth utilization, reduces energy consumption, and accelerates inference times, making transformer models robust and efficient for specialized hardware platforms. Additionally, embodiments leverage high-throughput datatypes and normalization techniques for various transformer-based models.

Embodiments may include a method including: obtaining, by a processor, input data having a number of bits according to a first precision and including one or more tokens; determining, by the processor, a second precision as a level of precision for input to a next computation operation of a neural network architecture; for each particular token of the one or more tokens of the input data: generating, by the processor, a token scale factor based on a range of values associated with the token; and executing, by the processor, a quantization operation on the token of the input data using the token scale factor to update the token of the input data from the first precision to a quantized token having the second precision for the level of precision for the next computation operation; and generating, by the processor, output data by executing the next computation operation using each quantized token having the number of bits according to the second precision.

The method may include generating, by the processor, a channel scale factor for each channel of one or more channels of a tensor; and for each channel of the tensor, applying, by the processor, the channel scale factor according to the second precision. The method may include, for each channel of the one or more channels of the tensor: determining, by the processor, a maximum absolute value amongst a plurality of values of the input data in the channel; and determining, by the processor, the channel scale factor based upon a range of values amongst the plurality of values of the input data in the channel using the maximum absolute value of the input data in the channel.

The method may include determining, by the processor, the level of precision for the input data based on at least one of: a signal-to-noise ratio of the input data, a loss function associated with a training process of the neural network architecture, or a computational constraint of a hardware accelerator. The method may include extracting, by the processor, the one or more tokens from the input data.

The method may include, during a training phase of the neural network architecture: obtaining, by the processor, a training data having the first precision; executing, by the processor, the quantization operation on the training data according to the second precision to update the number of bits of the training data from the first precision to the second precision; generating, by the processor, predicted output data of the next computation operation based upon the training data, by executing the next computation operation using the training data having the number of bits according to the second precision; and updating, by the processor, one or more parameters of the neural network architecture having the next computation operation based on a loss value between the predicted output data and a training label associated with the training data.

The processor may execute the next computation operation using an accelerator including at least one of a MAC unit or a SIMD processor.

The method may include generating, by the processor, a plurality of data blocks from the input data based upon a tiling configuration of a tensor along one or more dimensions of the tensor, each data block of the input data includes a subset of values within the tensor defined along the one or more dimensions of the tensor; and for each data block of the plurality of data blocks, applying, by the processor, a block scale factor to the data block based upon a range of values amongst the subset of values of the data block according to the second precision.

The method may include, for each data block of the plurality data blocks: determining, by the processor, a maximum absolute value amongst the subset of values of the input data in the data block; and determining, by the processor, the block scale factor based upon the range of values amongst the subset of values of the input data in the data block using the maximum absolute value of the data block.

The method may include storing, by the processor, each token scale factor into a non-transitory machine-readable storage.

Embodiments may include a system including a processor. The processor may be configured to: obtain input data having a number of bits according to a first precision and including one or more tokens; determine a second precision as a level of precision for input to a next computation operation of a neural network architecture; for each particular token of the one or more tokens of the input data: generate a token scale factor based on a range of values associated with the token; and execute a quantization operation on the token of the input data based upon using the token scale factor to update the token of the input data from the first precision to a quantized token having the second precision for the level of precision for the next computation operation; and generate output data by executing the next computation operation using each quantized token having the number of bits according to the second precision.

The processor may be further configured to: generate a channel scale factor for each channel of one or more channels of a tensor; and for each channel, apply the channel scale factor to the channel according to the second precision. The processor may be further configured to: for each channel of the one or more channels of the tensor: determine a maximum absolute value amongst a plurality of values of the input data in the channel; and determine the channel scale factor based upon a range of values using the maximum absolute value.

The processor is further configured to determine the level of precision based on at least one of: a signal-to-noise ratio of the input data, a loss function associated with a training process of the neural network architecture, or a computational constraint of a hardware accelerator. The processor may be further configured to extract the one or more tokens from the input data.

The processor may be further configured to: during a training phase of the neural network architecture: obtain training data having the first precision; execute the quantization operation on the training data according to the second precision; generate predicted output data of the next computation operation using the training data having the second precision; and update one or more parameters of the neural network architecture based on a loss value between the predicted output data and a training label.

The processor may be configured to execute the next computation operation using an accelerator including at least one of a MAC unit or a SIMD processor.

The processor may be further configured to: generate a plurality of data blocks from the input data based upon a tiling configuration of a tensor along one or more dimensions of the tensor, each data block of the input data includes a subset of values within the tensor defined along the one or more dimensions of the tensor; and for each data block of the plurality of data blocks, apply a block scale factor to the data block based upon a range of values amongst the subset of values of the data block according to the second precision.

The processor may be further configured to: for each data block of the plurality data blocks: determine a maximum absolute value amongst the subset of values of the input data in the data block; and determine the block scale factor based upon the range of values amongst the subset of values of the input data in the data block using the maximum absolute value of the data block.

The processor may be further configured to store each token scale factor into a non-transitory machine-readable storage.

The processor is further configured to: for each data block of the plurality data blocks: determine a maximum absolute value amongst the subset of values of the sensor data in the data block; and determine the block scale factor based upon the range of values amongst the subset of values of the sensor data in the data block using the maximum absolute value of the data block.

### BRIEF DESCRIPTION OF THE DRAWINGS

Non-limiting embodiments of the present disclosure are described by way of example concerning the accompanying figures, which are schematic and are not intended to be drawn to scale. Unless indicated as representing the background art, the figures represent aspects of the disclosure.
**FIG. 1A** is a non-limiting example of components of a system in which the methods and systems discussed herein can be implemented.
**FIGS. 1B-1C** illustrate block diagrams of sensors integrated within the egos, according to embodiments.
**FIGS. 2A** shows a dataflow amongst components of a mixed-precision transformer portion of a machine-learning architecture, according to various embodiments.
**FIG. 2B** shows another dataflow amongst components of a mixed-precision transformer portion of a machine-learning architecture, according to embodiments.
**FIG. 2C** shows another dataflow amongst components of a mixed-precision transformer portion of a machine-learning architecture implementing Rotary Position Embedding (RoPE) layers, according to embodiments.
**FIG. 2D** shows another dataflow amongst components of a mixed-precision transformer portion of a machine-learning architecture implementing a feedforward network, according to embodiments.
**FIG. 2E** shows another dataflow amongst components of a mixed-precision transformer portion of a machine-learning architecture implementing a hybrid quantization approach, according to embodiments.
**FIG. 3** is a dataflow amongst components of dynamic quantization layers of a mixed-precision transformer, according to embodiments.
**FIG. 4** is a dataflow amongst components of portion of a mixed-precision transformer for performing convolution operations, according to embodiments.
**FIG. 5** is a dataflow amongst components of portions of a mixed-precision transformer for performing convolution operations, according to embodiments.
**FIG. 6** is a flowchart of a method for processing sensor data using a mixed-precision transformer of a machine-learning architecture, according to embodiments.

### DETAILED DESCRIPTION

Reference will now be made to the illustrative embodiments depicted in the drawings, and specific language will be used here to describe the same. It will nevertheless be understood that no limitation of the scope of the claims or this disclosure is thereby intended. Alterations and further modifications of the inventive features illustrated herein, and additional applications of the principles of the subject matter illustrated herein, which would occur to one skilled in the relevant art and having possession of this disclosure, are to be considered within the scope of the subject matter disclosed herein. Other embodiments may be used and/or other changes may be made without departing from the spirit or scope of the present disclosure. The illustrative embodiments described in the detailed description are not meant to be limiting to the subject matter presented.

The mixed-precision quantization framework is designed for transformer models of machine-learning architectures and optimized for accelerators, which may be equipped with MAC units (e.g., INT4 MAC, INT8 MAC, INT15 MAC, INT16 MAC) and SIMD processors (e.g., FP32 SIMD). The mixed-precision transformer architecture leverages high-throughput datatypes, enabling the efficient use of both integer and floating-point arithmetic. The input data undergoes several transformations and normalizations within the mixed-precision transformer. The input data may include types of tokenizable data that components of the machine-learning architecture, such as the transformer, may tokenize, extract, or otherwise parse into tokens and/or process as tokens of the input data. Embodiments described herein implement input sensor data, though embodiments are not so limited. The input data may include virtually all structured or unstructured data types and formats, including but not limited to sensor data, image data, audio signals, text, tabular data, and time-series data, among others. A normalization layer is responsible for performing normalization operations on the input sensor data, including RMSNorm, LayerNorm, and other normalization techniques.

One of the critical aspects of the mixed-precision transformer is the use of dynamic quantization. The dynamic quantization layers execute functions to vary the level of precision of the input sensor data. Tensors are dynamically quantized per token typically from a higher precision data type (e.g., BF15, BF16) to a lower precision data type (e.g., INT4, INT8, INT15, INT16). This approach allows for dynamic input ranges, making the machine-learning architecture to be robust to different permutations of input data. Although embodiments described herein mention the use of dynamic quantization functions to improve the performance of transformer models, embodiments are not so limited. The dynamic quantization functions described herein may be implemented in various types of machine-learning models and machine-learning architectures in order to increase or decrease the precision (e.g., number of bits) of data representing vectors or matrices (or other types of data) as needed to improve performance of the layers or functions of the various types of machine-learning models. As mentioned, the various features and functions described herein may be applicable to any data type or format of input data that can be tokenized, for various types of sources or modalities from which the input data may be received. This includes input data originated at or received from, for example, sensors, documents, or logs, among other types of digital sources.

The dynamic quantization function of the dynamic quantization layers involves generating unique scale factors for quantization independently along a specified axis within the input sequence. For a sequence length N and hidden dimension D, this means generating N unique scale factors, allowing precise control over the quantization process and balancing computational efficiency with accuracy.

The mixed-precision quantization framework offers several advantages, including reduced memory bandwidth requirements, improved energy efficiency, and accelerated inference times. These benefits contribute to the overall performance and adoption of the transformer-based models on specialized hardware platforms.

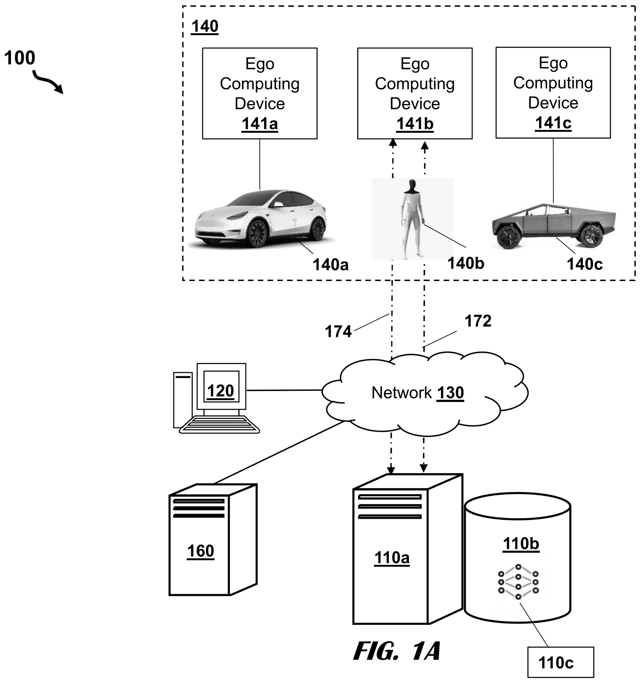

**FIG. 1A** is a non-limiting example of components of a system in which the methods and systems discussed herein can be implemented. **FIG. 1A** illustrates components of an AI-enabled visual data analysis system **100.** The system **100** may include an analytics server **110a,** a system database **110b,** an administrator computing device **120,** egos **140a-b** (collectively ego(s) **140),** ego computing devices **141a-c** (collectively ego computing devices **141),** and a server **160.** The system **100** is not confined to the components described herein and may include additional or other components not shown for brevity, which are to be considered within the scope of the embodiments described herein.

The above-mentioned components may be connected through a network **130.** Examples of the network **130** may include, but are not limited to, private or public LAN, WLAN, MAN, WAN, and the Internet. The network **130** may include wired and/or wireless communications according to one or more standards and/or via one or more transport mediums.

The communication over the network **130** may be performed in accordance with various communication protocols such as Transmission Control Protocol and Internet Protocol (TCP/IP), User Datagram Protocol (UDP), and IEEE communication protocols. In one example, the network **130** may include wireless communications according to Bluetooth specification sets or another standard or proprietary wireless communication protocol. In another example, the network **130** may also include communications over a cellular network, including, for example, a GSM (Global System for Mobile Communications), CDMA (Code Division Multiple Access), or an EDGE (Enhanced Data for Global Evolution) network.

The system **100** illustrates an example of a system architecture and components that can be used to train and execute one or more AI models, such the AI model(s) **110c.** Specifically, as depicted in **FIG. 1A** and described herein, the analytics server **110a** can execute the AI model(s) **110c** using data retrieved from the egos **140** (e.g., by using data streams **172** and **176)** to make navigational decisions. When the AI model(s) **110c** have been trained, each of the egos **140** may have access to and execute the trained AI model(s) **110c.** For instance, the vehicle **140a** having the ego computing device **141a** may transmit its camera feed to the trained AI model(s) **110c** and may determine the occupancy status of its surroundings (e.g., data stream **174).** Moreover, the data ingested and/or predicted by the AI model(s) **110c** with respect to the egos **140** (at inference time) may also be used to improve the AI model(s) **110c.** Therefore, the system **100** depicts a continuous loop that can periodically improve the accuracy of the AI model(s) **110c.** Moreover, the system **100** depicts a loop in which data received the egos **140** can be used to the AI model(s) **110c** at training phase in addition to the inference phase.

The analytics server **110a** may be configured to collect, process, and analyze navigation data (e.g., images captured while navigating) and various sensor data collected from the egos **140.** The collected data may then be processed and prepared into a training dataset. The training dataset may then be used to train one or more AI models, such as the AI model **110c.** The analytics server **110a** may also be configured to collect visual data from the egos **140.** Using the AI model **110c** (trained using the methods and systems discussed herein), the analytics server **110a** may generate navigational decisions for the egos **140.**

In **FIG. 1A****,** the AI model **110c** is illustrated as a component of the system database **110b,** but the AI model **110c** may be stored in a different or a separate component, such as cloud storage or any other data repository accessible to the analytics server **110a**.

The analytics server **110a** may also be configured to display an electronic platform illustrating various training attributes for training the AI model **110c.** The electronic platform may be displayed on the administrator computing device **120,** such that an analyst can monitor the training of the AI model **110c**. An example of the electronic platform generated and hosted by the analytics server **110a** may be a web-based application or a website configured to display the training dataset collected from the egos **140** and/or training status/metrics of the AI model **110c.**

The analytics server **110a** may be any computing device comprising a processor and non-transitory machine-readable storage capable of executing the various tasks and processes described herein. Non-limiting examples of such computing devices may include workstation computers, laptop computers, server computers, and the like. While the system **100** includes a single analytics server **110a,** the system **100** may include any number of computing devices operating in a distributed computing environment, such as a cloud environment.

The egos **140** may represent various electronic data sources that transmit data associated with their previous or current navigation sessions to the analytics server **110a.** The egos **140** may be any apparatus configured for navigation, such as a vehicle **140a** and/or a truck **140c.** The egos **140** are not limited to being vehicles and may include robotic devices as well. For instance, the egos **140** may include a robot **140b,** which may represent a general purpose, bipedal, autonomous humanoid robot capable of navigating various terrains. The robot **140b** may be equipped with software that enables balance, navigation, perception, or interaction with the physical world. The robot **140b** may also include various cameras configured to transmit visual data to the analytics server **110a.**

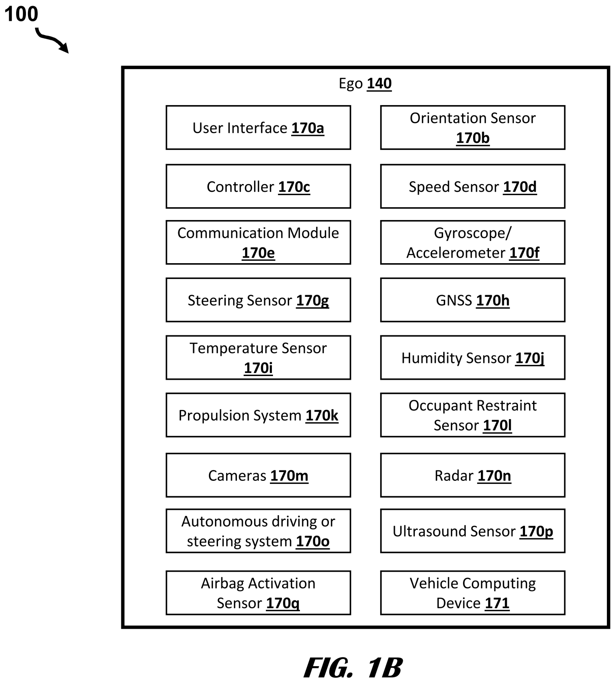

Even though referred to herein as an "ego," the egos **140** may or may not be autonomous devices configured for automatic navigation. For instance, in some embodiments, the ego **140** may be controlled by a human operator or by a remote processor. The ego **140** may include various sensors, such as the sensors depicted in **FIG. 1B****.** The sensors may be configured to collect data as the egos **140** navigate various terrains (e.g., roads). The analytics server **110a** may collect data provided by the egos **140.** For instance, the analytics server **110a** may obtain navigation session and/or road/terrain data (e.g., images of the egos **140** navigating roads) from various sensors, such that the collected data is eventually used by the AI model **110c** for training purposes.

As used herein, a navigation session corresponds to a trip where egos **140** travel a route, regardless of whether the trip was autonomous or controlled by a human. In some embodiments, the navigation session may be for data collection and model training purposes. However, in some other embodiments, the egos **140** may refer to a vehicle purchased, rented, leased, etc. by a consumer and the purpose of the trip may be categorized as everyday use. The navigation session may start when the egos **140** move from a non-moving position beyond a threshold distance (e.g., 0.1 miles, 100 feet) or exceed a threshold speed (e.g., over 0 mph, over 1 mph, over 5 mph). The navigation session may end when the egos **140** are returned to a non-moving position and/or are turned off (e.g., when a driver exits a vehicle).

The egos **140** may represent a collection of egos monitored by the analytics server **110a** to train the AI model(s) **110c.** For instance, a driver for the vehicle **140a** may authorize the analytics server **110a** to monitor data associated with their respective vehicle. As a result, the analytics server **110a** may utilize various methods discussed herein to collect sensor/camera data and generate a training dataset to train the AI model(s) **110c** accordingly. The analytics server **110a** may then apply the trained AI model(s) **110c** to analyze data associated with the egos **140** and to predict a navigational decision. Moreover, additional/ongoing data associated with the egos **140** can also be processed and added to the training dataset, such that the analytics server **110a** re-calibrates the AI model(s) **110c** accordingly. Therefore, the system **100** depicts a loop in which navigation data received from the egos **140** can be used to train the AI model(s) **110c.** The egos **140** may include processors that execute the trained AI model(s) **110c** for navigational purposes. While navigating, the egos **140** can collect additional data regarding their navigation sessions, and the additional data can be used to calibrate the AI model(s) **110c.** That is, the egos **140** represent egos that can be used to train, execute/use, and re-calibrate the AI model(s) **110c.** In a non-limiting example, the egos **140** represent vehicles purchased by customers that can use the AI model(s) **110c** to autonomously navigate while simultaneously improving the AI model(s) **110c.**

The egos **140** may be equipped with various technology allowing the egos to collect data from their surroundings and (possibly) navigate autonomously. For instance, the egos **140** may be equipped with inference chips to run self-driving software.

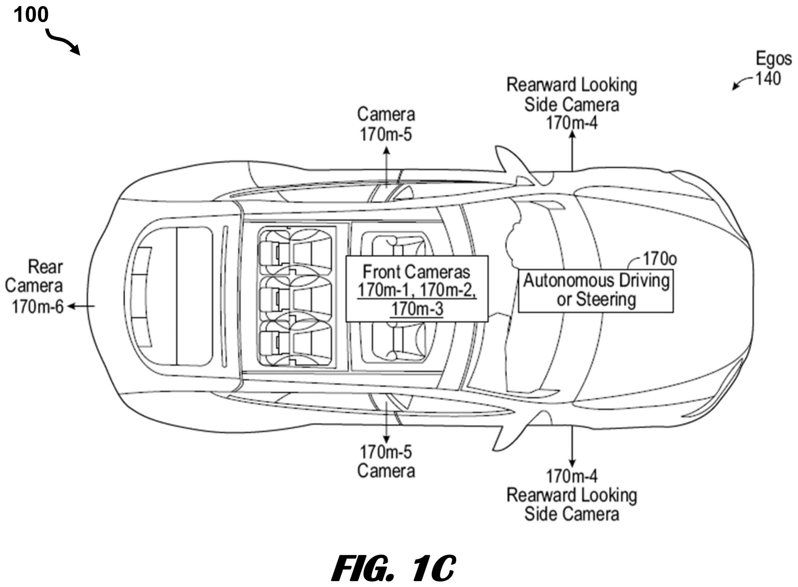

Various sensors for each ego **140** may monitor and transmit the collected data associated with different navigation sessions to the analytics server **110a.** **FIGS. 1B-1C** illustrate block diagrams of sensors integrated within the egos **140,** according to embodiments. The number and position of each sensor discussed with respect to **FIGS. 1B-1C** may depend on the type of ego discussed in **FIG. 1A****.** For instance, the robot **140b** may include different sensors than the vehicle **140a** or the truck **140c.** For instance, the robot **140b** may not include the airbag activation sensor **170q.** Moreover, the sensors of the vehicle **140a** and the truck **140c** may be positioned differently than illustrated in **FIG. 1C****.**

As discussed herein, various sensors integrated within each ego **140** may be configured to measure various data associated with each navigation session. The analytics server **110a** may periodically collect data monitored and collected by these sensors, wherein the data is processed in accordance with the methods described herein and used to train the AI model **110c** and/or execute the AI model **110c** to generate the occupancy map.

The egos **140** may include a user interface **170a**. The user interface **170a** may refer to a user interface of an ego computing device (e.g., the ego computing devices **141** in **FIG. 1A****).** The user interface **170a** may be implemented as a display screen integrated with or coupled to the interior of a vehicle, a heads-up display, a touchscreen, or the like. The user interface **170a** may include an input device, such as a touchscreen, knobs, buttons, a keyboard, a mouse, a gesture sensor, a steering wheel, or the like. In various embodiments, the user interface **170a** may be adapted to provide user input (e.g., as a type of signal and/or sensor information) to other devices or sensors of the egos **140** (e.g., sensors illustrated in **FIG. 1B****),** such as a controller **170c.**

The user interface **170a** may also be implemented with one or more logic devices that may be adapted to execute instructions, such as software instructions, implementing any of the various processes and/or methods described herein. For example, the user interface **170a** may be adapted to form communication links, transmit and/or receive communications (e.g., sensor signals, control signals, sensor information, user input, and/or other information), or perform various other processes and/or methods. In another example, the driver may use the user interface **170a** to control the temperature of the egos **140** or activate its features (e.g., autonomous driving or steering system **170o).** Therefore, the user interface **170a** may monitor and collect driving session data in conjunction with other sensors described herein. The user interface **170a** may also be configured to display various data generated/predicted by the analytics server **110a** and/or the AI model **110c.**

An orientation sensor **170b** may be implemented as one or more of a compass, float, accelerometer, and/or other digital or analog device capable of measuring the orientation of the egos **140** (e.g., magnitude and direction of roll, pitch, and/or yaw, relative to one or more reference orientations such as gravity and/or magnetic north). The orientation sensor **170b** may be adapted to provide heading measurements for the egos **140.** In other embodiments, the orientation sensor **170b** may be adapted to provide roll, pitch, and/or yaw rates for the egos **140** using a time series of orientation measurements. The orientation sensor **170b** may be positioned and/or adapted to make orientation measurements in relation to a particular coordinate frame of the egos **140.**

A controller **170c** may be implemented as any appropriate logic device (e.g., processing device, microcontroller, processor, application-specific integrated circuit (ASIC), field programmable gate array (FPGA), memory storage device, memory reader, or other device or combinations of devices) that may be adapted to execute, store, and/or receive appropriate instructions, such as software instructions implementing a control loop for controlling various operations of the egos **140.** Such software instructions may also implement methods for processing sensor signals, determining sensor information, providing user feedback (e.g., through user interface **170a**), querying devices for operational parameters, selecting operational parameters for devices, or performing any of the various operations described herein.

A communication module **170e** may be implemented as any wired and/or wireless interface configured to communicate sensor data, configuration data, parameters, and/or other data and/or signals to any feature shown in **FIG. 1A** (e.g., analytics server **110a).** As described herein, in some embodiments, communication module **170e** may be implemented in a distributed manner such that portions of communication module **170e** are implemented within one or more elements and sensors shown in **FIG. 1B**. In some embodiments, the communication module **170e** may delay communicating sensor data. For instance, when the egos **140** do not have network connectivity, the communication module **170e** may store sensor data within temporary data storage and transmit the sensor data when the egos **140** are identified as having proper network connectivity.

A speed sensor **170d** may be implemented as an electronic pitot tube, metered gear or wheel, water speed sensor, wind speed sensor, wind velocity sensor (e.g., direction and magnitude), and/or other devices capable of measuring or determining a linear speed of the egos **140** (e.g., in a surrounding medium and/or aligned with a longitudinal axis of the egos **140)** and providing such measurements as sensor signals that may be communicated to various devices.

A gyroscope/accelerometer **170f** may be implemented as one or more electronic sextants, semiconductor devices, integrated chips, accelerometer sensors, or other systems or devices capable of measuring angular velocities/accelerations and/or linear accelerations (e.g., direction and magnitude) of the egos **140,** and providing such measurements as sensor signals that may be communicated to other devices, such as the analytics server **110a.** The gyroscope/accelerometer **170f** may be positioned and/or adapted to make such measurements in relation to a particular coordinate frame of the egos **140.** In various embodiments, the gyroscope/accelerometer **170f** may be implemented in a common housing and/or module with other elements depicted in **FIG. 1B** to ensure a common reference frame or a known transformation between reference frames.

A global navigation satellite system (GNSS) **170h** may be implemented as a global positioning satellite receiver and/or another device capable of determining absolute and/or relative positions of the egos **140** based on wireless signals received from space-born and/or terrestrial sources, for example, and capable of providing such measurements as sensor signals that may be communicated to various devices. In some embodiments, the GNSS **170h** may be adapted to determine the velocity, speed, and/or yaw rate of the egos **140** (e.g., using a time series of position measurements), such as an absolute velocity and/or a yaw component of an angular velocity of the egos **140.**

A temperature sensor **170i** may be implemented as a thermistor, electrical sensor, electrical thermometer, and/or other devices capable of measuring temperatures associated with the egos **140** and providing such measurements as sensor signals. The temperature sensor **170i** may be configured to measure an environmental temperature associated with the egos **140,** such as a cockpit or dash temperature, for example, which may be used to estimate a temperature of one or more elements of the egos **140.**

A humidity sensor **170j** may be implemented as a relative humidity sensor, electrical sensor, electrical relative humidity sensor, and/or another device capable of measuring a relative humidity associated with the egos **140** and providing such measurements as sensor signals.

A steering sensor **170g** may be adapted to physically adjust a heading of the egos **140** according to one or more control signals and/or user inputs provided by a logic device, such as controller **170c.** Steering sensor **170g** may include one or more actuators and control surfaces (e.g., a rudder or other type of steering or trim mechanism) of the egos **140** and may be adapted to physically adjust the control surfaces to a variety of positive and/or negative steering angles/positions. The steering sensor **170g** may also be adapted to sense a current steering angle/position of such steering mechanism and provide such measurements.

A propulsion system **170k** may be implemented as a propeller, turbine, or other thrust-based propulsion system, a mechanical wheeled and/or tracked propulsion system, a wind/sail-based propulsion system, and/or other types of propulsion systems that can be used to provide motive force to the egos **140.** The propulsion system **170k** may also monitor the direction of the motive force and/or thrust of the egos **140** relative to a coordinate frame of reference of the egos **140.** In some embodiments, the propulsion system **170k** may be coupled to and/or integrated with the steering sensor **170g.**

An occupant restraint sensor **1701** may monitor seatbelt detection and locking/unlocking assemblies, as well as other passenger restraint subsystems. The occupant restraint sensor **1701** may include various environmental and/or status sensors, actuators, and/or other devices facilitating the operation of safety mechanisms associated with the operation of the egos **140.** For example, occupant restraint sensor **1701** may be configured to receive motion and/or status data from other sensors depicted in **FIG. 1B****.** The occupant restraint sensor **1701** may determine whether safety measurements (e.g., seatbelts) are being used.

Cameras **170m** may refer to one or more cameras integrated within the egos **140** and may include multiple cameras integrated (or retrofitted) into the ego **140,** as depicted in **FIG. 1C****.** The cameras **170m** may be interior- or exterior-facing cameras of the egos **140.** For instance, as depicted in **FIG. 1C****,** the egos **140** may include one or more interior-facing cameras **170m-1.** These cameras may monitor and collect footage of the occupants of the egos **140.** The egos **140** may also include a forward-looking side camera **170m-2,** a camera **170m-3** (e.g., integrated within the door frame), and a rearward-looking side camera **170m-4.**

In some embodiments, the methods and systems discussed herein can operate exclusively with 2D sensors (e.g., 2D cameras) that may explicitly exclude depth cameras, time-of-flight (ToF) sensors, and other specialized depth-sensing technologies. The AI model and processing pipelines discussed herein can be trained to extract spatial and environmental information solely from monocular or stereo 2D image inputs without relying on depth estimation hardware. This ensures compatibility with 2D camera systems that only transmit captured images without any additional depth data, while maintaining robust performance in autonomous navigation and visual data analysis.

Referring to **FIG. 1B****,** a radar **170n** and ultrasound sensors **170p** may be configured to monitor the distance of the egos **140** to other objects, such as other vehicles or immobile objects (e.g., trees or garage doors). The radar **170n** and the ultrasound sensors **170p** may be integrated into the egos **140** as depicted in **FIG. 1C****.** The egos **140** may also include an autonomous driving or steering system **170o** configured to use data collected via various sensors (e.g., radar **170n,** speed sensor **170d,** and/or ultrasound sensors **170p)** to autonomously navigate the ego **140.**

Therefore, autonomous driving or steering system **170o** may analyze various data collected by one or more sensors described herein to identify driving data. For instance, autonomous driving or steering system **170o** may calculate a risk of forward collision based on the speed of the ego **140** and its distance to another vehicle on the road. The autonomous driving or steering system **1700** may also determine whether the driver is touching the steering wheel. The autonomous driving or steering system **170o** may transmit the analyzed data to various features discussed herein, such as the analytics server.

An airbag activation sensor **170q** may anticipate or detect a collision and cause the activation or deployment of one or more airbags. The airbag activation sensor **170q** may transmit data regarding the deployment of an airbag, including data associated with the event causing the deployment.

Referring back to **FIG. 1A****,** the administrator computing device **120** may represent a computing device operated by a system administrator. The administrator computing device **120** may be configured to display data retrieved or generated by the analytics server **110a** (e.g., various analytic metrics and risk scores), wherein the system administrator can monitor various models utilized by the analytics server **110a,** review feedback, and/or facilitate the training of the AI model(s) **110c** maintained by the analytics server **110a**.

The ego(s) **140** may be any device configured to navigate various routes, such as the vehicle **140a** or the robot **140b.** As discussed with respect to **FIGS. 1B-1C****,** the ego **140** may include various telemetry sensors. The egos **140** may also include ego computing devices **141.** Specifically, each ego may have its own ego computing device **141.** For instance, the truck **140c** may have the ego computing device **141c.** For brevity, the ego computing devices are collectively referred to as the ego computing device(s) **141.** The ego computing devices **141** may control the presentation of content on an infotainment system of the egos **140,** process commands associated with the infotainment system, aggregate sensor data, manage communication of data to an electronic data source, receive updates, and/or transmit messages. In one configuration, the ego computing device **141** communicates with an electronic control unit. In another configuration, the ego computing device **141** is an electronic control unit. The ego computing devices **141** may comprise a processor and a non-transitory machine-readable storage medium capable of performing the various tasks and processes described herein. For example, the AI model(s) **110c** described herein may be stored and performed (or directly accessed) by the ego computing devices **141.** Non-limiting examples of the ego computing devices **141** may include a vehicle multimedia and/or display system.

In operation, the one or more egos **140** may collect image data from their cameras and transmit the image data to the processor (placed locally on the one or more egos **140)** and/or the analytics server **110a,** as depicted in the data stream **172.** The processor may then execute the AI model(s) **110c** to predict navigational decisions for the one or more egos **140.**

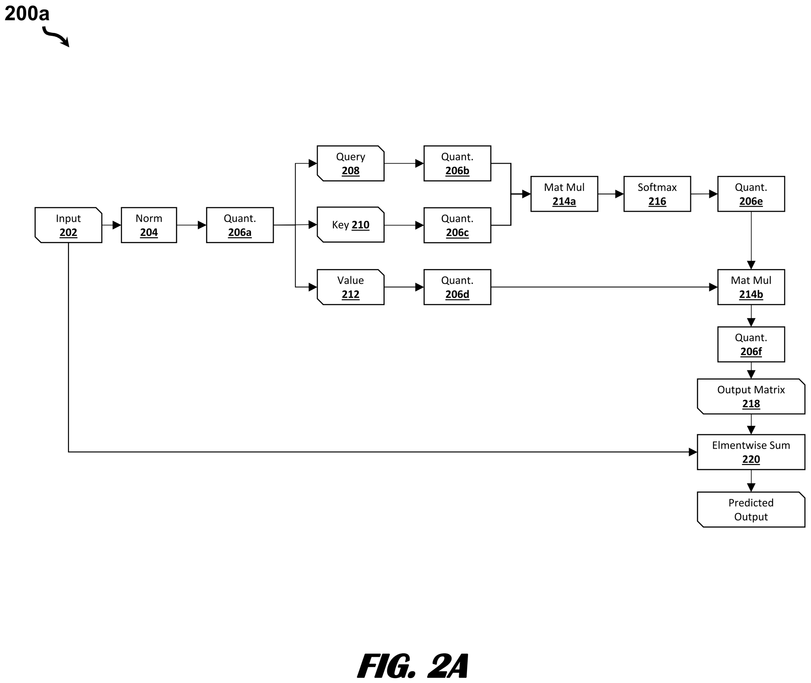

**FIGS. 2A-2E** are example dataflows amongst components of a mixed-precision transformer portion of variants of a machine-learning architectures **200a-200e** (generally referred to as a machine-learning architecture **200).**

**FIG. 2A** is an example dataflow amongst components of a mixed-precision transformer portion of a machine-learning architecture **200a,** according to embodiments. The mixed-precision transformer **200a** may be implemented by one or more processors of an automated device, such as an ego computing device (e.g., ego computing device **141),** an analytics server (e.g., analytics server **110a),** or other computing systems configured to execute machine-learning models. These processors may include, for example, INT8 MAC units and FP32 SIMD processors. The machine-learning architecture **200** includes a normalization layer **204** that receives input data **202,** dynamic quantization layers **206a-206f** (generally referred to as dynamic quantization layers **206),** query vector projections (referred to as query projections **208),** key vector projections (referred to as key projections **210),** value vector projections (referred to as value projections **212),** matrix multiplication layers **214a-214b** (generally referred to as matrix multiplication layers **214),** an output matrix **218,** an elementwise sum layer **220,** and the predicted output **222** of the transformer of the machine-learning architecture **200.**

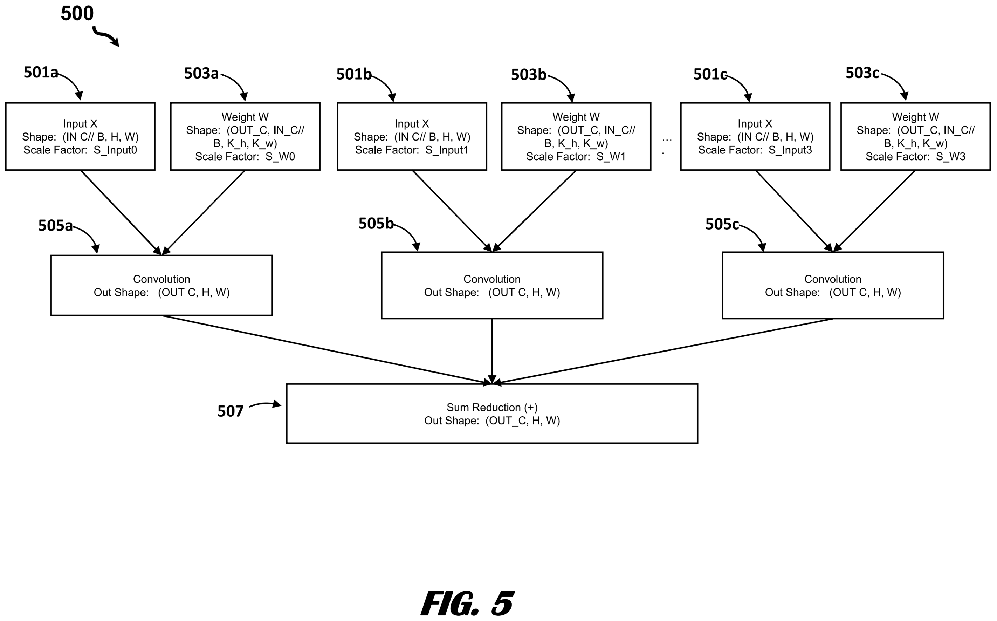

Dynamic quantization generally refers to calculating and implementing scale factors for quantization operations. The dynamic quantization operations of the dynamic quantization layers **206** may be performed "on the fly" and/or calculated offline. The dynamic quantization operations can be further broken down and performed at various different axes or levels of the tensor (per token, per channel, per block or segment), as in the operations of **FIG. 5****.** The dynamic quantization operations can be performed according to various types of data types or data ranges (e.g. dynamic quantization per token to or from, for example, INT4, INT8, or INT16), though the embodiments depicted herein show dynamic quantization to INT8. For instance, each dynamic quantization layer **206** may compute a set of scale factors per token (e.g., one scale factor for each row of the input tensor of the input data **202)** and store these scale factors in registers or other non-transitory machine-readable storage. The quantization layers **206** then apply the scale factors to convert the higher-precision tensors (e.g., BF15) to lower-precision tensors (e.g., INT8) for efficient processing.

The input sensor data **202** includes various types of sensor data or other inputs generated and used by an automated device, such as a robot or autonomous vehicle. Examples of sensor data for an autonomous vehicle include visual data from cameras, lidar data capturing distances and shapes of surrounding objects, radar data for detecting speed and movement of nearby entities, and ultrasonic data for close-range object detection.

The normalization layer **204** includes operations for ingesting and normalizing the input sensor data **202.** The normalization layer **204** is responsible for performing normalization operations on the input sensor data **202,** such as Root Mean Square Normalization (RMS Norm), Layer Normalization (LayerNorm), and other normalization techniques. The ingestion process into the transformer architecture includes normalization operations executed by the normalization layer **204,** which standardizes the input sensor data **202** through techniques such as RMS Norm and LayerNorm. The input tensor of the input data **202** may be represented in a higher-precision format (e.g., BF15), and the normalization layer **204** may preserve this precision to maintain numerical stability.

Subsequently, dynamic quantization layers **206** adjust the precision of the data types from higher precision formats (e.g., BF15, BF16) to lower precision formats (e.g., INT8), optimizing the data for efficient processing. The transformer utilizes extraction layers (not shown) for parsing input elements or tokens from the input data **202,** and generating query vectors **208,** key vectors **210,** and value vectors **212** that represent different aspects of each token or element. These vectors can undergo linear or other transformations to generate relevant projections used for attention operations, ultimately combining and weighting the value vectors to produce a comprehensive understanding of the input data input data **202.** Generally, the dynamic quantization operations adjust from higher precision to lower precision, though embodiments are not so limiting. Moreover, the dynamic quantization operations may alter the number of bits for a particular precision or data type (e.g. INT15, INT8, INT4, etc.). In some embodiments, the dynamic quantization layers **206** may adjust the precision from a lower precision (e.g., fewer bits) or lower precision data format (e.g., INT8) to a higher precision (e.g., more bits) or higher precision format (e.g., BF15, BF16). Additionally or alternatively, in some embodiments, the dynamic quantization layers **206** may adjust the level of precision by reducing or increasing the number of bits, without affecting the data format.

The dynamic quantization layers **206** can execute dynamic quantization functions to update or change the data type and level of precision of data being handled by components of the machine-learning architecture **200.** For instance, a first dynamic quantization layer **206a** executes the dynamic quantization function on the input data **202** or tensors, to reduce the input data **202** or tensors from a higher precision data type (e.g., floating point BF15, BF16) to a lower precision data type (e.g., integer INT8).

The transformer of the machine-learning architecture **200** includes layers or functions for extracting vectors for performing attention functions. In operation, an extraction layer (not shown) parses or extracts input elements or (tokens) of the input data **202** and generates or projects these tokens into query vectors **208** of query projections, key vectors **210** of key projections, and value vectors **212** of value projections, in the form of sperate matrices of the respective vectors.

Each token in a sequence of the input data **202** starts with an embedding vector that encapsulates a general meaning. The transformer may learn to extract specific aspects of this meaning by applying three separate linear transformations using linear transformation functions, to generate the query vector **208,** key vector **210,** and value vectors **212.**

A query vector **208** of the query projection represents an aspect of a token that will be used to "search" for relevant context. The query vector **208** represents a current element (or token) for which the transformer model is trying to determine which parts of the input data **202** are most relevant when performing the transformer's search function. In some cases, the generates the query vector **208** by projecting the input data **202** using a learned linear transformation.

A key vector **210** of the key projections represents the features against which the query vector **208** is compared. Each token from the input data **202** is associated with a key vector **210,** which serves as an identifier or a reference for performing the transformer's search function. When performing the search function using a query vector **208,** the query vector **208** is compared against each key vector **210** to determine query similarity scores, which indicate how much focus should be placed on each corresponding token represented by the particular key vector **210.**

A key vector **210** represents or contains the content or information that will be combined, weighted by one or more values or scores. The value vectors **210** represent the "actual" information (e.g., sensor data) of the tokens that will be aggregated. After computing the query similarity scores between the query vector **208** and each key vector **210,** the transformer model uses the query similarity scores to create a weighted sum of the value vectors **210.** This sum represents the attended information relevant to the query.

The attention operations of the transformer **200** can receive the input data **202** in a lower precision data format (e.g., INT8), and may then extract or generate the various projections in a higher precision format (e.g., BF15). As such, the transformer **200** may feed the projections into one or more dynamic quantization layers **206** to reduce the projections to a lower precision data format (e.g., INT8). In some cases, the matrix multiplication layers **214** may transform the INT8 inputs to BF15 or FP32 for higher-precision.

The matrix multiplication layers **214** within the transformer processes query vectors **208,** key vectors **210,** and value vectors **212** derived from input data **202.** Linear transformations applied to input elements parsed from the input data **202** generate these vectors, encapsulating aspects of each token. In some cases, the matrix multiplication layer **214a** combines these vectors through operations that compute similarity scores between query vectors **208** and key vectors **210.** In some cases, these scores determine a weighted sum of corresponding value vectors **212,** that a matrix multiplication layer **214b** uses when producing attended information that represents the input data **202** in a transformed format.

In some embodiments, the machine-learning architecture **200** may implement offline per-channel quantization of weights for a training process or tuning purposes, in which parameters or weights of a neural network or other components of the machine-learning architecture **200.** The dynamic quantization operations may be performed offline, where the dynamic quantization operations are performed after the training phase and do not require any modifications to the training process itself. In offline per-channel quantization, the machine-learning architecture **200** implements the dynamic quantization layers **206** (or static quantization functions) to quantize the weights of a model, during or after the training process of the initial training phase. In some cases, the training process or tuning process may use pre-trained knowledge embedded in the model parameters such that the quantization operations do not significantly degrade the model's performance. The quantization is done on a per-channel basis, meaning that each channel of the weight tensor is quantized independently. During the training process of the training phase, weights or parameters may be dynamically quantized per channel so that the precision is adjusted based on the specific requirements of each channel. The dynamic quantization layers **206** among other components of the machine-learning architecture **200** may be trained on various levels of precision, such as INT8, FP32, and FP16, among others. The dynamic quantization layers **206** may be trained using weights that are quantized to the lower precision data type, such as INT8. This quantization process involves mapping the high-precision weights to a lower precision representation. In particular, the dynamic quantization layers **206** may be trained to calculate scale factors for each channel (e.g., "channel scale factor"), which are used to dynamically quantize the weights or perform other functions. The dynamic quantization operations may be tailored to a preconfigured or pretrained range of values in each channel, or dynamically determined range of values in each channel.

Optionally, the dynamic quantization process may emulate during training to mimic "real world" conditions that the machine-learning architecture **200** will encounter during inference time.

The machine-learning architecture **200** may include an optional loss layer (not shown) or loss function that adjusts parameters of the dynamic quantization layers **206** or other components of the machine-learning architecture **200.** The loss value may be computed between the predicted output and a corresponding training label, such as a ground truth classification or regression target. These adjusted parameters of a neural network or other components of the machine-learning architecture **200** cause the dynamic quantization layers **206** to determine different levels of precision based on the loss function and other metrics during the training process of the training phase. This allows for targeted precision adjustments, such that critical parts of the machine-learning architecture **200** use higher precision inputs and less critical parts of the machine-learning architecture **200** can use lower precision inputs. In some embodiments, the transformer of the machine-learning architecture **200a** may be trained using quantized data to emulate inference-time conditions. During the training process of the training phase, the machine-learning architecture **200** may obtain training data represented in a first precision format (e.g., FP32 or BF16) and apply a quantization operation using dynamic quantization layers **206** to convert the training data to a second, lower precision format (e.g., INT8). The quantized training data is then processed through the layers of the transformer, including the matrix multiplication layers **214** and attention mechanisms, to generate predicted output data. The optional loss function may compare the predicted output data to a corresponding training label, such as a ground truth classification or regression target. Based on the computed loss value, the loss function or back-propagation function updates one or more parameters of the neural network of the transformer model, including weights associated with the projection layers **208, 210, 212** and the dynamic quantization layers **206.**

In some cases, prior to the matrix multiplication operation of the matrix multiplication layers **214,** the dynamic quantization layers **206** converts the inputs into lower precision formats, such as INT8, then reverting it to higher precision formats, such as BF15, for downstream operations. The transformer integrates dynamic quantization layers **206** to adjust data precision dynamically, optimizing computational efficiency. Each input token starts with an embedding vector, which undergoes transformations to produce relevant projections used in attention operations.

The softmax layer **216** is implemented to convert the aggregated information from certain vectors into a probability distribution. The softmax layer **212,** for example, takes the weighted sum of the input vectors and applies an exponential function, followed by normalization, to generate a set of probabilities that sum to one. These probabilities represent the attention weights assigned to each token, reflecting the importance of each token in the context of the input data **202.** The softmax operation enables the transformer to focus on relevant tokens by emphasizing those with higher attention weights, thus facilitating effective information retrieval and representation for further processing stages.

An output matrix **218** (sometimes denoted 'WO') resulting from a matrix multiplication layer **214b** encapsulates the weighted sum of value vectors **212** and combined query vector **208** and key vector **210** derived from the input data **202.** This matrix **218** operates as a representation of the attended information, transformed through a series of linear transformations and attention mechanisms. Each entry in the matrix **218** corresponds to a combination of input elements, reflecting the relevance and context established by the attention functions. The resulting weights in the output matrix indicate the significance of each token within the given sequence, as determined by the similarity scores between the query and key vectors.

The elementwise sum operation **220** in the transformer aggregates corresponding elements as aggregated in the output matrix **218** to produce a single combined vector. This operation **220** involves summing the individual elements of vectors on a per-element basis. For instance, if two vectors have the same dimension, the sum operation will add each element of the first vector to the corresponding element of the second vector, resulting in a new vector of the same dimension. This combined vector integrates information from the input elements, retaining the individual contributions of each vector while producing a new vector that encapsulates the aggregated data. The elementwise sum operation **220** represents a function of synthesizing information across different layers and projections, enabling the transformer to maintain a coherent and comprehensive representation of the input data **202.**

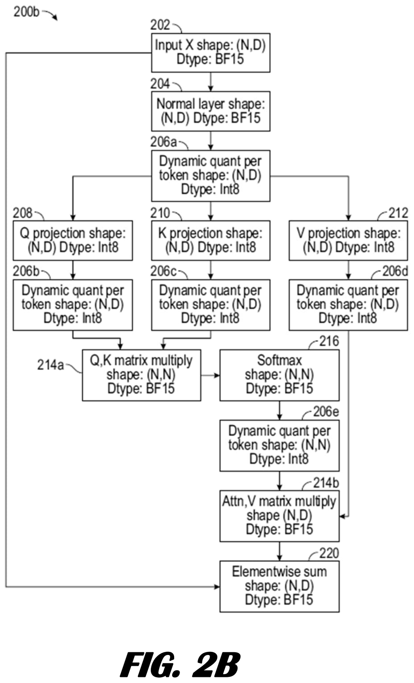

**FIG. 2B** is another example dataflow amongst components of a mixed-precision transformer portion of a machine-learning architecture **200b,** according to embodiments. The mixed-precision transformer **200b** may be implemented by one or more processors of an automated device, such as an ego computing device (e.g., ego computing device **141),** an analytics server (e.g., analytics server **110a),** or other computing systems configured to execute machine-learning models. These processors may include, for example, MAC units and SIMD processors. The machine-learning architecture **200b** is generally the same as the machine-learning architecture **200a,** where **FIG. 2B** depicts example parameters, dimensions, and data types of the data implemented at each of the various layers or operations.

The machine-learning architecture **200b** uses high throughput datatypes which leverages the INT8 MAC for data-loading. This allows important operations such as normalization operations (RMSNorm, LayerNorm) of normalization layers **204** and the residual stream to operate entirely on high-precision data. The input tensors of the input data **202** may be represented in BF15 format and normalized using normalization layer **204** before being quantized. Enabling a high-precision residual stream improves mixed precision transformer performance.

In addition to the high precision operations, **FIG. 2B** marks the areas in which tensors (e.g., query vectors **208,** key vectors **210,** value vectors **212)** are dynamically quantized per token by the dynamic quantization layers **206** to INT8. Each dynamic quantization layer **206** may compute a unique scale factor for each token (e.g., each row of the tensor), resulting in *N* scale factors for a sequence length *N*. These scale factors may be stored in registers or other non-transitory machine-readable storage and applied to convert BF15 tensors to INT8 format. For per token quantization, the dynamic quantization layers **206** may specify an axis along which scale factors for quantization are generated independently.

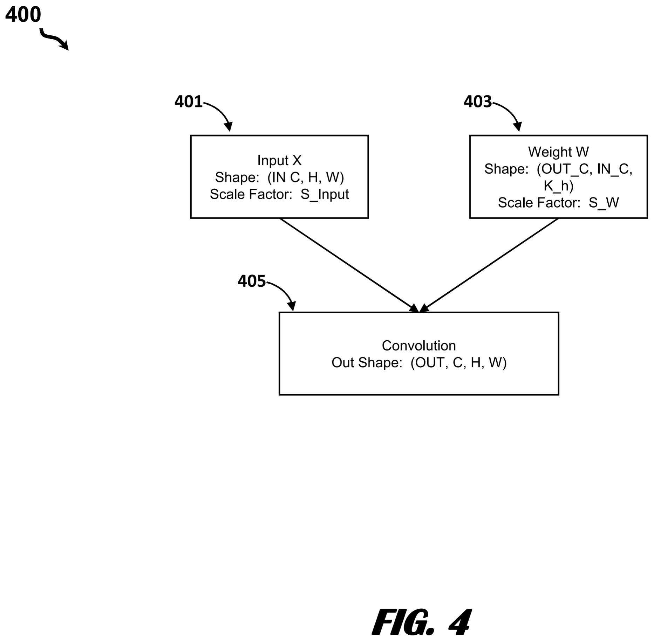

In the transformer component of the machine-learning architecture **200b,** for a sequence length *N* and hidden dimension *D,* this means the dynamic quantization layers **206** generate *N* unique scale factors. While the dynamic quantization still is a primary source of any model accuracy degradations, the degradation can be alleviated. In some cases, dense compute operations can be tiled based on the MAC unit shape. This allows the machine-learning architecture **200b** to introduce more quantization scale factors by splitting or tiling operations along both the input spatial dimension (Height, Width) and the output channel dimension. For example, for a tile of output size *M x N* with reduction dimension *K*, if the output dimension *M << D,* this means the machine-learning architecture **200b** generates *N* scales for every *M* element, rather than for every *D*. In some cases, dense operations can also be split along the "inner" dimension, via computing a sum of elementwise outer products, as in **FIGS. 4-5**.

Since the high-throughput datatypes allow for fully, high precision sums, an arbitrary number of scale factors can be introduced to the compute operation, enabling the transformer to preserve more information in regions of the tensor that would otherwise be compressed or saturated under global quantization. This is because the machine-learning architecture **200b** can split along spatial dimension *N,* outer dimension *M,* and inner dimension *K,* at any arbitrary granularity, albeit at a performance tradeoff.

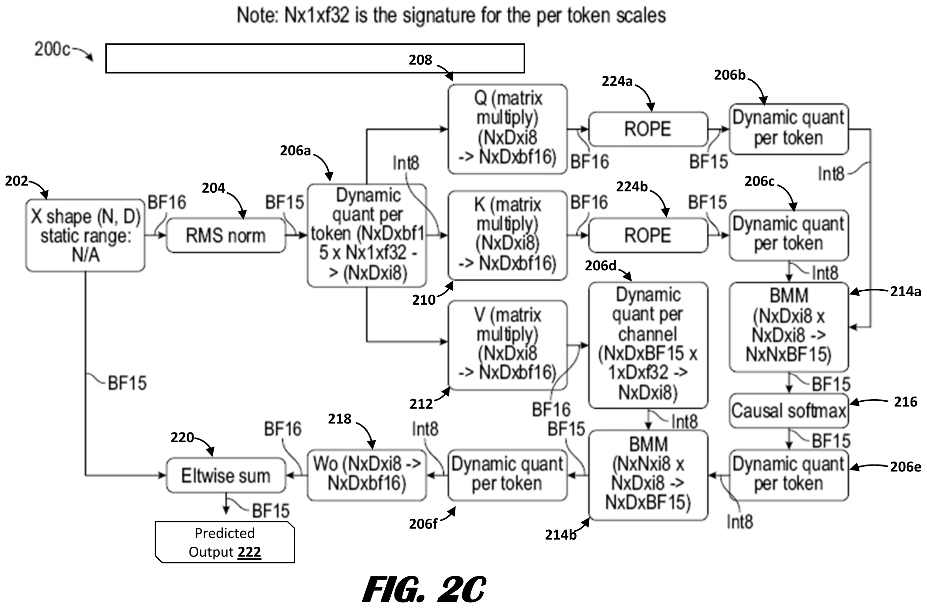

**FIG. 2C** is another example dataflow amongst components of a mixed-precision transformer portion of a machine-learning architecture **200c** implementing Rotary Position Embedding (RoPE), according to embodiments. The mixed-precision transformer **200c** may be implemented by one or more processors of an automated device, such as an ego computing device (e.g., ego computing device **141),** an analytics server (e.g., analytics server **110a**), or other computing systems configured to execute machine-learning models. These processors may include, for example, INT8 MAC units and SIMD processors. The machine-learning architecture **200c** is generally the same as the earlier described machine-learning architecture **200a**, where **FIG. 2C** depicts example parameters, dimensions, and data types of the data implemented at each of the various layers or operations. For instance, the machine-learning architecture **200c** includes an input tensor **202** of input sensor data, a normalization layer **204,** dynamic quantization layers **206a-206f** (generally referred to as dynamic quantization layers **206),** query vector **208** (or query projection **208),** key vector **210** (or key projection **210),** value vector **212** (or value projection **212),** RoPE layers **224a-224b** (generally referred to as RoPE layers **224),** matrix multiplication layers **214a-**214b (generally referred to as matrix multiplication layers **214),** softmax layer **216,** output matrix **218,** a sum layer **220,** and a predicted output **222.**

The input tensor **202** represents the input data entering the transformer of the machine-learning architecture **200c.** As shown in **FIG. 2C****,** the input sensor **202,** labeled "X" includes an annotation "Shape: (N, D)" and "BF16," indicating that the tensor **202** includes N tokens, each with *D* features, and is represented in bfloat16 (BF16) format.

The input tensor **202** is processed by normalization layer **204,** which performs normalization operations, such as RMSNorm or LayerNorm, to standardize the input distribution and converts the input tensor **202** from a received input data format (e.g., BF16) to another data format (e.g., BF15). For example, the normalization layer **204** performs an RMSNorm, indicating that Root Mean Square Normalization operation, is applied to the input tensor **202** before quantization.

The now-normalized tensor is then fed to a dynamic quantization layer **206a** that performs a quantization operation. To quantize the normalized input tensor data, the quantization operation of the first dynamic quantization layer **206a,** for example, computes per-token scale factors and converts or transforms the normalized BF15 tensor to a lower-precision data format (e.g., INT8 format). Each per-token scale factor (or token scale factor) may be computed for each token independently and applied during quantization operations. For instance, the dynamic quantization layer **206a** applies per-token quantization operations to the normalized input tensor. As shown in **FIG. 2C****,** the first dynamic quantization layer **206a** includes "NxDxbf15 × Nx1xf32 → NxDxi8," which indicates that each token (row) of the normalized tensor (BF15) input is scaled by a corresponding per-token scale factor (Nx1xf32) and quantized to another (INT8) format.

The quantized tensor is passed to the query projection **208** operations, key projection **210** operations, and value projection **212** operations, which perform various operations that transform or project the quantized sensor into a query vector (Q), a key vector (K), and a value vector (V). The operations of the query projection **208** transform the quantized input into the query vector. As seen in **FIG. 2C****,** the query projection **208** depicts "Q (Matrix Multiply NxDxi8 → NxDxbf15)," indicating that the INT8 input to the query projection **208** is multiplied by a weight matrix to produce a BF15 output. The operations of the key projection **210** transform the quantized input into a key vector. As seen in **FIG. 2C****,** the key project **210** depicts "K (Matrix Multiply NxDxi8 → NxDxbf15)," indicating that that the INT8 input to the key projection **210** is multiplied by a weight matrix to produce a BF15 output. The operations of the value projection **212** transform the quantized input into a value vector. As seen in **FIG. 2C****,** the value projection **212** depicts "V (Matrix Multiply NxDxi8 → NxDxbf15)," indicating that that the INT8 input to the key projection **210** is multiplied by a weight matrix to produce a BF15 output.

The query projection **208** and the key projection pass the query vector and the key vector to RoPE layers that perform RoPE functions, where query vector is passed through a RoPE layer **224a,** and the key vector is passed through another RoPE layer **224b.** The RoPE function of the RoPE layers **224** is a flexible mechanism for handling positional information in transformer models. Unlike fixed or learned positional encodings, RoPE layers **224** employ a rotation-based method to encode positions, enabling a more nuanced representation of positional information. The RoPE functions rotate vectors in a high-dimensional space, where the RoPE layers **224** may apply a rotation matrix to the corresponding input embeddings, with the angle of rotation corresponding to the position in the sequence. This rotation operation is designed to preserve the relative distances between positions.

The RoPE function of the RoPE layers **224** applies the rotation-based transformation to the query vector and the key vector to encode the positional information in a higher-precision format (e.g., BF15 or BF16). The RoPE layers **224** rotate the input embeddings based upon the vector positions, before being fed into the self-attention mechanisms (e.g., matrix multiplication layer **214a).** The resulting embeddings retain positional information in a way that enhances the transformer's ability to process sequence data. After the RoPE transformation, the resulting vectors may be dynamically quantized by dynamic quantization layers **206b-206c** to INT8 format for efficient processing on INT8 MAC units. Each token may be associated with a unique scale factor, computed and stored in registers, to enable per-token quantization.

The transformer of the machine-learning architecture **200c** executes the RoPE layers **224** to the respective vectors in a higher-precision data format, before applying the dynamic quantization layers **206** to reduce the level of precision. This combination of high-precision RoPE and low-precision quantized attention enables the transformer to maintain positional accuracy while benefiting from the efficiency of mixed-precision computation.

The matrix multiplication layer **214a** computes attention scores by multiplying the matrices of the query vector and key vector. In **FIG. 2C****,** the matrix multiplication layer **214a** depicts an operation of "BMM (NxDxi8 × NxDxi8 → NxNxBF15)," where BMM stands for "batched matrix multiplication" using the quantized outputs of the RoPE layers **224a-224b** and dynamic quantization layers **206b-206b.** The result is a BF15 matrix of attention scores.

The softmax layer **216** processes the attention scores generated by matrix multiplication layer **214a.** This softmax layer **216** converts the raw attention logits into a normalized probability distribution, enabling the transformer to assign relative importance to each token in the sequence. In **FIG. 2C****,** the softmax layer **216** is annotated as "Causal Softmax," indicating that the softmax operation is applied according to a causal (i.e., autoregressive) operation, such that each token's attention is restricted to preceding tokens, preserving the autoregressive property required for certain transformer applications (e.g., language modeling, sequential prediction).

The value projection **212** outputs the value vector to a dynamic quantization layer **206d.** The dynamic quantization layer **206d** performs per-token quantization operation on the value projection **212.** This layer receives the value vector in BF15 format and applies a scale factor specific to each token to convert the data into INT8 format. In **FIG. 2C****,** the dynamic quantization layer **206d** is annotated "Dynamic Quant Per Token" and annotated with "BF15," indicating that the input to this layer is in bfloat16 precision. The dynamic quantization layer **206d** is further annotated "Dynamic Quant Per Token (NxDxbf15 × Nx1xf32 → NxDxi8)," which indicates that each token (row) of the BF15 input is scaled by a corresponding per-token scale factor (Nx1xf32) and quantized to INT8 format. The per-token quantization enables the transformer to adaptively compress the value vectors while preserving numerical fidelity across varying input distributions. This operation is essential for enabling efficient matrix multiplication in subsequent layers, particularly when executed on INT8 MAC hardware.

The matrix multiplication layer **214b** performs a core attention operation by computing the weighted sum of the value vectors using the attention scores, where the matrix multiplication layer **214b** computes the weighted sum of value vectors using the attention scores. The matrix multiplication layer **214b** receives INT8 inputs, including the quantized attention weights from dynamic quantization layer **206e** and the quantized value vectors from the dynamic quantization layer **206d.** The operation is executed as a batched matrix multiplication, producing an output tensor in BF15 format. In **FIG. 2C****,** the matrix multiplication layer **214b** is annotated "BMM (NxNxi8 × NxDxi8 → NxDxBF15)," where BMM stands for the batched matrix multiplication operation, and the annotation indicates that the input matrices, one of shape (N, N) and the other of shape (N, D), are multiplied to generate an output of shape (N, D), with the result computed in bfloat16 precision. In this way, the matrix multiplication layer **214b** aggregates contextual information across tokens in the sequence.

The dynamic quantization layer **206f** receives the output of matrix multiplication layer **214b** and performs per-token quantization to convert the BF15 output into INT8 format. The dynamic quantization operation of the dynamic quantization layer **206f** shortens or compresses the attention output of the matrix multiplication layer **214b** from, for example, BF15 to INT8 format. The dynamic quantization layer **206f** may perform the operations similar to the other dynamic quantization layers **206,** such as "Dynamic Quant Per Token (NxDxbf15 × Nx1x{32 → NxDxi8), where the quantization is performed per token, using a unique scale factor for each token (row), and these scale factors are stored in registers for efficient access during runtime.

The output matrix **218** represents the result of the quantized attention mechanism after the matrix multiplication results in matrix multiplication layer **214b** (e.g., attention matrix multiplied by value matrix) and subsequent quantization by the dynamic quantization layer **206f.** The output matrix **218** serves as the transformed representation of the input sequence of the input data **202,** capturing contextual relationships between tokens. In **FIG. 2C****,** the output matrix **218** is labeled "Wo (NxDxi8 → NxDxbf16)," which indicates that the INT8 tensor produced by dynamic quantization layer **206f** is projected back into BF16 format. This projection operation may be performed using a learned weight matrix to restore higher-precision representation for downstream operations.

The elementwise sum layer **220** performs a residual addition between the output of the attention mechanism and the original input or residual stream. This operation may be an architectural feature of transformer models, such as the transformer of the machine-learning architecture **200c,** designed to preserve the original input signal of the input data **202** while integrating the contextualized representation produced by the attention block.

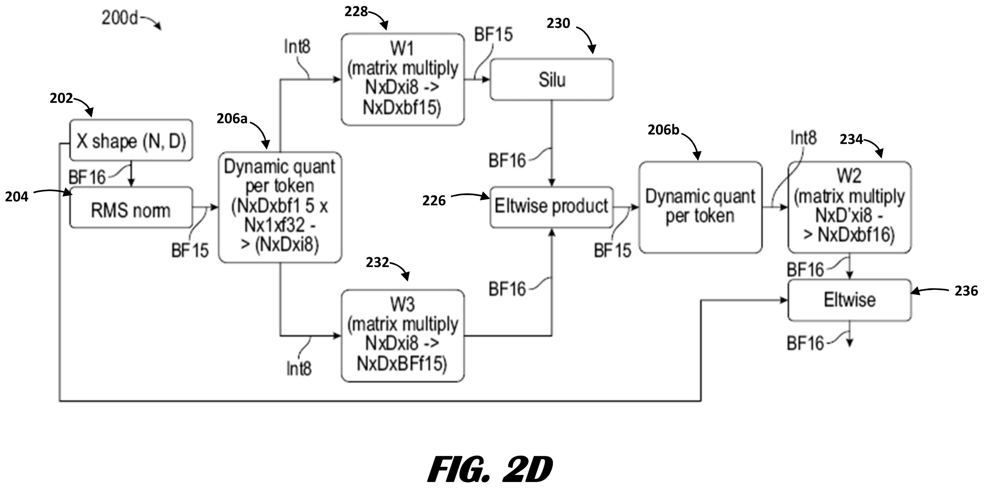

**FIG. 2D** is another example dataflow amongst components of a mixed-precision transformer portion of a machine-learning architecture **200d,** according to embodiments. The machine-learning architecture **200d** is generally the same as the earlier described machine-learning architectures **200a-200b,** where **FIG. 2D** depicts example parameters, dimensions, and data types of the data implemented at each of the various layers or operations. The machine-learning architecture **200d** implements the dynamically quantized attention in a feedforward network. The mixed-precision transformer of the machine-learning architecture **200d** may be implemented by one or more processors of an automated device, such as an ego computing device (e.g., ego computing device **141),** an analytics server (e.g., analytics server **110a),** or other computing systems configured to execute machine-learning models. These processors may include INT8 MAC units and SIMD processors. The architecture of **FIG. 2D** shares several structural similarities with the architecture of **FIGS. 2A-2C****,** including the use of an input tensor **202,** a normalization layer **204,** and dynamic quantization layers **206.** The machine-learning architecture **200d** of **FIG. 2D** depicts a feedforward network that follows the attention layer in a transformer architecture. This feedforward network includes additional matrix multiplication layers **228, 232, 234,** nonlinear activation layer 23b0, and elementwise operation layers **226, 236.**

The input tensor **202,** labeled "X" in **FIG. 2D****,** has shape (N, D) and is represented in BF16 format. This tensor is first processed by normalization layer **204,** which applies RMSNorm to standardize the input distribution. The normalized tensor is then quantized by dynamic quantization layer **206a,** which performs per-token quantization using scale factors stored in registers or other non-transitory machine-readable storage.

The quantized tensor is passed to a first matrix multiplication layer **228,** labeled "W₁ (Matrix Multiply NxDxi8 → NxDxbf15)," and a second matrix multiplication layer **232,** labeled "W₃ (Matrix Multiply NxDxi8 → NxDxBF15)." Each of these matrix multiplication layers **228, 232** performs a linear transformation on the INT8 input, projecting it into BF15 format. The first matrix multiplication layer **228** applies a learned weight matrix W₁ to transform the quantized tensor input into a data representation configured for a nonlinear activation function of the activation layer **230.** The activation layer **230** performs the activation function, such as a Sigmoid Linear Unit (SiLU) function, on the inputted data representation, in BF15 format, of the quantized input tensor from the first matrix multiplication layer **228.** In parallel, the second matrix multiplication layer **232** applies a different learned weight matrix W₃ to produce a complementary data representation of the same quantized input tensor, also in BF15 format.

The outputs of SiLU activation layer **230** and the second matrix multiplication layer **232** are then passed to an elementwise product layer **226,** labeled "Eltwise product." The elementwise operation layers **226** performs a token-wise multiplication of the two inputted BF15 tensors. This multiplicative interaction allows a neural network to modulate the activated features from W₁ with the complementary features from W₃.

The result of the elementwise product layer **226** is passed to a third matrix multiplication layer **234,** labeled "W₂ (Matrix Multiply NxD'xi8 → NxDxbf16)," which transforms and projects the intermediate representation from into BF16 format. This transformation prepares the data for integration with one or more downstream layers or operations.

The output of matrix multiplication layer **234** is passed to elementwise addition layer 236, labeled "Eltwise," which performs a residual addition function in BF16 precision. This operation integrates the transformed representations and prepares a predicted output for subsequent layers of the transformer or other downstream component of the machine-learning architecture **200d.**

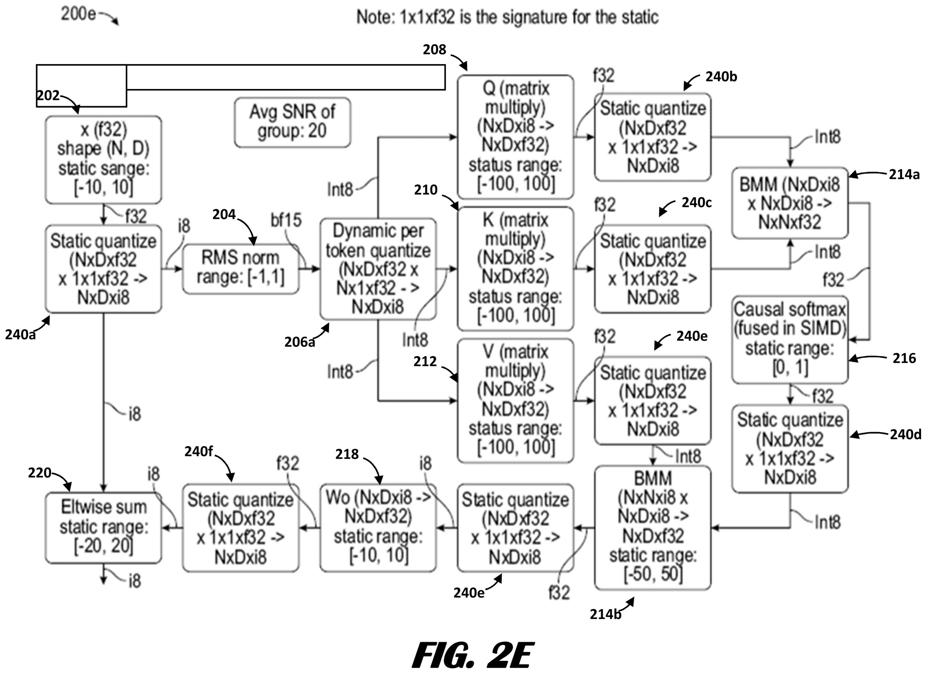

**FIG. 2E** is another example dataflow amongst components of a mixed-precision transformer portion of a machine-learning architecture **200e,** according to embodiments. The mixed-precision transformer of the machine-learning architecture **200e** may be implemented by one or more processors of an automated device, such as an ego computing device (e.g., ego computing device **141),** an analytics server (e.g., analytics server **110a),** or other computing systems configured to execute machine-learning models. These processors may include INT8 MAC units and SIMD processors. The machine-learning architecture **200e** is generally the same as the earlier described machine-learning architecture **200e,** where **FIG. 2E** depicts example parameters, dimensions, and data types of the data implemented at each of the various layers or operations.

The machine-learning architecture **200e** implements hybrid quantization that includes dynamic and static quantization, performed by static quantization layers **240a-240f** (generally referred to as static quantization layers **240)** and dynamic quantization layers **206.** The dynamic quantization layers **206** may be programmed or trained for a particular Signal-to-Noise Ratio (SNR) value. For instance, **FIG. 2E** includes an annotation "Avg SNR of group: 20," which refers to the average SNR achieved by the quantized representation of a group of tokens or activations intended for dynamic per-token quantization operations of the dynamic quantization layers **206.** The static quantization layers **240** may apply a fixed-range quantization to a specific tensor or other type of input. In this way, the machine-learning architecture **200e** is more likely to, for example, detect certain objects or conditions in a roadway, such as a redlight, and generate operation instructions for the automated device, such as stopping at the redlight.

The static quantization layers **240** may be used when the input distribution is known or stable, allowing for simplified and efficient quantization without runtime computation of scale factors, as required by the dynamic quantization layers **206.** For example, certain static quantization layers **240b-240e** may quantize the query vector, key vector, and value vector, as outputted from the tensor projection operations **208, 210, 212,** and the certain other static quantization layers **240d-240f** may quantize the attention weights, outputted projections, and a residual sum, respectively.

The input tensor **202,** labeled "X (f32)," has shape (N, D) and is represented in FP32 format. The input tensor **202** is annotated with a "static range [-10, 10]," indicating that the values of the tensor within the given range (10 and -10). The input tensor **202** is passed to a static quantization layer **240a,** which applies a fixed-range quantization operation to convert the FP32 tensor to INT8 format. Each static quantization layers **240,** including static quantization layer **240a,** performs These layers are labeled "Static Quantize (NxDxf32 × 1x1xf32 → NxDxi8)" and transforms the input tensor **202** to an INT8 value (or other format) using a predetermined scale factor. In some cases, the scale factor is derived from the known static range of the input tensor **202,** such as the static range of [-10, 10]. In some cases, values of the input data **202** that are outside the static range are clipped to fit within the INT8 range.

The quantized input tensor is then passed to a normalization layer **204,** which performs a normalization operation, such as Root Mean Square Normalization (RMSNorm) or Layer Normalization (LayerNorm). The normalization layer **204** standardizes the input distribution to for a range, such as [-1, 1] in **FIG. 2E****.**

The normalized tensor is then passed to the dynamic quantization layer **206a,** which performs per-token quantization using scale factors computed at runtime. Each token (e.g., each row of the input tensor **202)** is associated with a unique scale factor, which is used to transform the floating-point values to INT8 format. The dynamic quantization layer **206a** computes the quantization parameters, such as the scale factor (Nx1xf32), are chosen such that the resulting INT8 representation of each token achieves the given average SNR.

The quantized and normalized tensor is then passed to query projection layer **208,** key projection layer **210,** and value projection layer **212** to perform matrix multiplication operations and output the corresponding query vector, key vector, and value vector. Each of these layers **208, 210, 212** performs a matrix multiplication operation using INT8 inputs and produces outputs in FP32 format. These layers **208, 210, 212** are annotated with "static range" values (e.g., [-100, 100]), which indicate the ranges of the resulting vectors. These annotations are used to inform subsequent static quantization layers **240b, 240c, 240e,** which convert the outputs of the Q, K, and V projection layers **208, 210, 212** back to INT8 format using fixed quantization parameters.

The quantized query and key vectors (Q, K) are passed to matrix multiplication layer **214a,** which performs a BMM operation to compute attention scores. The output of matrix multiplication layer **214a** is passed to softmax layer **216,** which applies a causal softmax operation to normalize the attention scores. The normalized scores are quantized by static quantization layer **240d** and passed to matrix multiplication layer **214b.** The value vector (V) is quantized by the static quantization layers **240e** and also passed to the matrix multiplication layer **214b.** The matrix multiplication layer **214b** performs a second BMM operation using the quantized attention scores and the quantized value vector, from the preceding static quantization layers **240d, 240e.**

The output of matrix multiplication layer **214b** is passed to output matrix **218,** labeled "Wo (NxDxi8 → NxDxf32)," which projects the INT8 tensor back into FP32 format. The result is then quantized by static quantization layer **240f** and passed to elementwise sum layer **220,** which performs a residual addition operation to integrate the attention output with the quantized input tensor from the static quantization layer **240a** or residual stream. The elementwise sum operation is annotated with a "static range [-20, 20]," indicating that the range of the output values produced by the elementwise sum layer **220.**

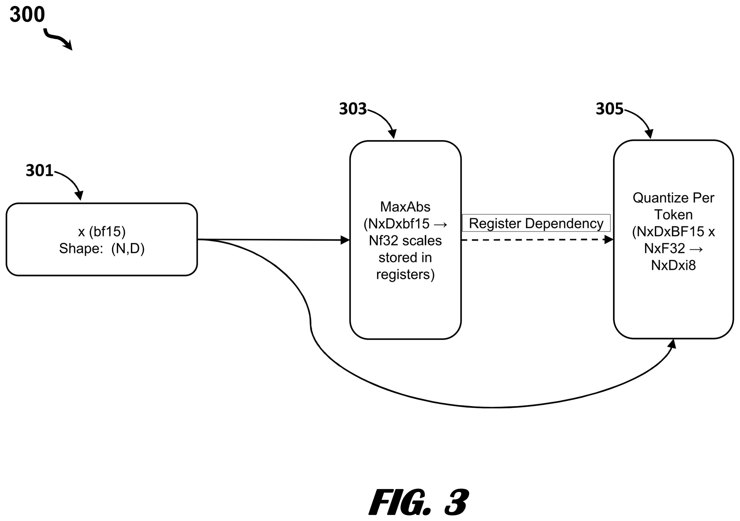

**FIG. 3** is an example dataflow amongst components of dynamic quantization layers of a mixed-precision transformer of a machine-learning architecture **300,** according to embodiments. The machine-learning architecture **300** may be implemented by one or more processors of an automated device, such as an ego computing device (e.g., ego computing device **141),** an analytics server (e.g., analytics server **110a),** or other computing systems configured to execute machine-learning models. These processors may include INT8 MAC units and SIMD processors, though embodiments are not so limited and may include, for example, INT4 MAC units, INT8 MAC units, INT15 MAC units, and INT16 MAC units, among others. The dynamic quantization layer **300** is designed to convert high-precision input tensors into lower-precision representations (e.g., INT4, INT8, INT 15, INT16) using per-token scale factors computed at runtime. The machine-learning architecture **300** includes an input tensor **301** or vector, an absolute maximum layer **303,** non-transitory machine-readable storage (e.g., registers), and a quantization layer **305.** The dynamic quantization layers adjust the precision of data on-the-fly based on the range of values in the input tensor **301.**

The input tensor **301,** labeled "Input X," has shape (N, D) and is represented in BF15 format. This tensor may represent a sequence of N tokens, each with D features. The input tensor **301** is passed to a maximum absolute value ("MaxAbs") operation **303,** which computes the maximum absolute value for each token (i.e., each row of the tensor **301).** This operation **303** produces a vector of N scale factors, which are stored in registers or other non-transitory machine-readable storage. These scale factors are used to normalize the input tensor **301** on a per-token basis.

In some implementations, a static quantization layer (not shown) uses a fixed range on the input tensor **301** that was previously determined during calibration, which may not be optimal for all scenarios. For example, a range calibrated for daylight conditions may not be suitable for low-light conditions, leading to inefficient use of bit width. The dynamic quantization layer of the machine-learning architecture **300** adjusts the range in real-time based on the values of the current input tensor **301.** In this way, the dynamic quantization layers are optimized for the current data, improving precision and reducing information loss.

The absolute maximum layer **303** determines the maximum absolute value in the input tensor **301.** The absolute maximum layer **303** identifies the maximum absolute value by iterating through each element of the input tensor **301** and comparing the absolute value against a current maximum absolute value. When the absolute maximum layer **303** identifies the maximum absolute value in the input tensor **301,** the absolute maximum layer **303** dynamically adjusts the range to fit the current data of the input tensor **301.** In some embodiments. the scale factor computed according to the maximum absolute value may be stored in registers or other non-transitory machine-readable storage. This register-based storage enables efficient reuse of the scale factors during quantization and downstream operations, minimizing memory latency and improving throughput. For example, in dynamic quantization layers of the machine-learning architecture 300, each token's scale factor is computed and stored in a register, allowing the quantization layer 305 to apply the corresponding scale factor to the BF15 input tensor **301** in a per-token manner.

The quantization layer **305** generates the scaled integer values for the input tensor **301** in a lower-precision data type using the adjusted range. The quantization layer **305** uses the adjusted range as a scale that the quantization layer **305** applies against the tensor values **301** to generate the quantized version of the input tensor **301** in the lower-precision data format. Using the maximum absolute value for the tokens of the input tensor **301,** the quantization layer **305** determines and applies a scaling factor for scaling the values of the input tensor **301,** where the maximum absolute value maps to a maximum integer value available in the lower-precision data. For example, if the maximum absolute value is '20' for the tokens of the **301,** then the quantization layer **305** determines a scale factor for scaling the values of the input tensor **301** such that '20' maps to the maximum integer value of the lower-precision data type (e.g., 127 for INT8).

**FIG. 4** is an example dataflow amongst components of portion of a mixed-precision transformer **400** for performing convolution operations, according to embodiments. The mixed-precision transformer **400** may be implemented by one or more processors of an automated device, such as an ego computing device (e.g., ego computing device **141),** an analytics server (e.g., analytics server **110a),** or other computing systems configured to execute machine-learning models. These processors may include INT8 MAC units and FP32 SIMD processors though embodiments are not so limited and may include, for example, INT4 MAC units, INT8 MAC units, INT15 MAC units, and INT16 MAC units, among others. The portions of the mixed-precision transformer **400** include an input tensor **401** or vector, a weight value **403** (or weight tensor), and a convolution layer **405.** The mixed-precision transformer **400** shows convolution operations according to two scale factors, a scaling factor (e.g., S_Input) and weighting factor (e.g., S_W), which represent the scaling of the entire tensors **401** of a given shape or dimension. The input tensor **401** and the weight value **403** (S_Input) are each associated with a single global scale factor (S_W), which may be applied uniformly across the entire tensor **401.** These scale factors may be derived from higher-precision representations (e.g., BF15 or FP32) and used to quantize the tensors to INT8 format.

In the quantization operations, the mixed-precision transformer **400** applies the first scaling factor to the input tensor **401** and the second scaling factor to the weight **403,** resulting in the scaled input tensor **401** and the scaled weight value **403,** which the mixed-precision transformer **400** feeds to the convolution layer **405.** These quantized tensors are then provided to the convolution layer **405,** which performs a convolution operation using INT8 MAC units.

The convolution layer **405** may execute convolution operations to perform matrix multiplication operations (e.g., as in matrix multiplication layers **214),** where the matrix multiplication operations may be operational components of attention mechanisms of the transformer **400** architecture.

**FIG. 5** is an example dataflow amongst components of portions of a mixed-precision transformer **500** for performing convolution operations, according to embodiments. The mixed-precision transformer **500** may be implemented by one or more processors of an automated device, such as an ego computing device (e.g., ego computing device **141),** an analytics server (e.g., analytics server **110a),** or other computing systems configured to execute machine-learning models. These processors may include INT8 MAC units and FP32 SIMD processors though embodiments are not so limited and may include, for example, INT4 MAC units, INT8 MAC units, INT15 MAC units, and INT16 MAC units, among others. The portions of the mixed-precision transformer **500** include input tensors **501a-501c** or vectors (generally referred to as input tensors **501),** weighting values **503a-503c** (generally to as weighting values **503),** convolution layers **505a-505c** (generally referred to as convolution layers **505),** and sum reduction layer **507.**

The mixed-precision transformer **500** splits the input tensors **501** and executes corresponding convolution layers **505.** In the quantization operations, the mixed-precision transformer **500** employs a set of scaling factors (e.g., S_Input0, S_Input1, S_Input2) for the input tensors **501** and a set of scaling factors (e.g., S_WO, S_W1, S_W3) for the scaling values **503.** The mixed-precision transformer **500** then feeds the scaled input tensors **501** and the scaled weighting values **503** to the corresponding convolution layers **505,** allowing for improved quantization performance at a cost of the sum reduction at the sum reduction layer **507.** By splitting the input tensor **501** and applying different scale factors, the convolution operations the different convolution layers **505** help manage outliers and vary data distributions, providing more precise quantization or matrix multiplication results. In some implementations, for example, the input tensor **501** and the weight tensor **503** are each divided into multiple data blocks. Each block is associated with its own scale factor (e.g., S_Input0, S_Input1, S_Input2 for input blocks and S_WO, S_W1, S_W3 for weight blocks), which may be derived from higher-precision representations (e.g., BF15 or FP32) and used to quantize the blocks to INT8 format. The mixed-precision transformer **500** applies the corresponding scale factors to each input and weight block, resulting in multiple scaled input tensors **501a**-501c and scaled weight tensors **503a-**503c

In some cases, the convolution layers **505** may execute the convolution operations to facilitate dynamic quantization by applying the scale factors to different segments of the input tensor **501.** In some cases, the convolution layers 505 may execute convolution operations to perform matrix multiplication operations (e.g., as in matrix multiplication layers **214),** where the matrix multiplication operations may be operational components of attention mechanisms of the transformer **500** architecture. As an example, each convolution layer **505a-505c** receives a pair of corresponding quantized input blocks and weight blocks and performs a convolution operation using INT8 MAC units. These convolution operations may be implemented as the matrix multiplication operations (e.g., as in matrix multiplication layers **214),** and may serve as the operational components of the attention mechanisms or feedforward layers of the transformer **500** architecture.

The outputs of the convolution layers **505a-505c** are provided to the sum reduction layer **507.** The sum reduction layer **507** performs a sum reduction operation on the outputs of the convolution layers **505.** Generally, sum reduction in the context of convolution operations refers to the process of summing the results of the convolution operations of the convolution layers **505** to produce a final output. In some cases, for example, the sum reduction layer **507** performs a sum reduction operation to aggregate the outputs of the individual block-wise convolutions of the convolution layers **505** into a single output tensor. As an example, the mixed-precision transformer **500** divides the input tensors **501** as smaller segments or blocks and executes the convolution operations by the convolution layers **505** on each input tensor **501a-501c** separately. After performing the convolution operations on the individual segments or blocks of the input tensors **501a-501c,** the convolution layers **505** generate and output results and the sum reduction layer **507** generates a sum of the output results to produce the final output.

As mentioned, in some embodiments, machine-learning architecture **500** may divide or split the tensors **501** into tiles or blocks for block-wise quantization. This tiling operation defines how the tensor **501** is partitioned into smaller data blocks along one or more dimensions, such as spatial dimensions (e.g., height, width), channel dimensions, or depth dimensions. Each tile or block may then be associated with a distinct scale factor (e.g., block-scale factor, channel scale factor), enabling various forms and granularity for quantization (e.g., per-token scale and quantization, per-channel scale and quantization, per-block scale and quantization). For example, the input tensor **501** and weight tensor **503** are split into multiple segments or blocks, each of which is quantized independently.

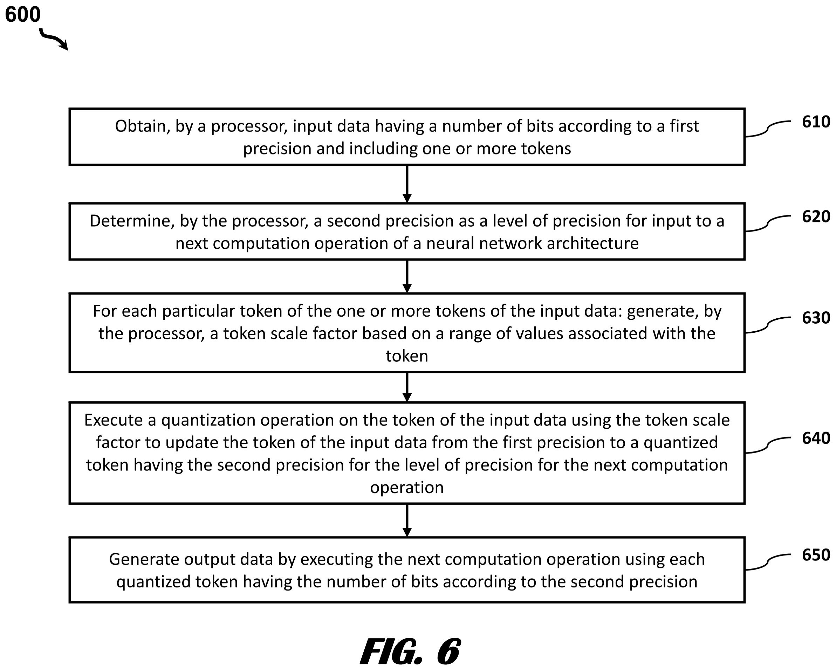

**FIG. 6** is a flowchart of an example method **600** for processing sensor data using a mixed-precision transformer of a machine-learning architecture. At operation **610,** a processor obtains input data (e.g., sensor data from a sensor of a robotic device), the input data having a number of bits according to a first precision. The input data includes or may be tokenized into one or more tokens.

At operation **620,** the processor determines a second precision as a level of precision for input to a next computation operation of a neural network architecture. At operation **630,** for each particular token of the one or more tokens of the input data, the processor generates a token scale factor based on a range of values associated with the particular token.

At operation **640,** for each particular token of the one or more tokens, the processor executes a quantization operation on the token of the input data using the token scale factor. In executing the quantization operation, the processor may update the token of the input data from the first precision to a quantized token having the second precision for the level of precision for the next computation operation. At operation **650,** the processor generates output data using the next computation operation and based upon the quantized tokens as updated or generated from the one or more tokens. The processor generates the output data by executing the next computation operation using each quantized token having the number of bits according to the second precision.

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

Embodiments implemented in computer software may be implemented in software, firmware, middleware, microcode, hardware description languages, or any combination thereof. A code segment or machine-executable instructions may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, attributes, or memory contents. Information, arguments, attributes, data, etc. may be passed, forwarded, or transmitted via any suitable means including memory sharing, message passing, token passing, network transmission, etc.

The actual software code or specialized control hardware used to implement these systems and methods is not limiting of the invention. Thus, the operation and behavior of the systems and methods were described without reference to the specific software code being understood that software and control hardware can be designed to implement the systems and methods based on the description herein.

When implemented in software, the functions may be stored as one or more instructions or code on a non-transitory computer-readable or processor-readable storage medium. The steps of a method or algorithm disclosed herein may be embodied in a processor-executable software module which may reside on a computer-readable or processor-readable storage medium. A non-transitory computer-readable or processor-readable media includes both computer storage media and tangible storage media that facilitate transfer of a computer program from one place to another. A non-transitory processor-readable storage media may be any available media that may be accessed by a computer. By way of example, and not limitation, such non-transitory processor-readable media may comprise RAM, ROM, EEPROM, CD-ROM or other optical disk storage, magnetic disk storage or other magnetic storage devices, or any other tangible storage medium that may be used to store desired program code in the form of instructions or data structures and that may be accessed by a computer or processor. Disk and disc, as used herein, include compact disc (CD), laser disc, optical disc, digital versatile disc (DVD), floppy disk, and Blu-Ray disc where disks usually reproduce data magnetically, while discs reproduce data optically with lasers. Combinations of the above should also be included within the scope of computer-readable media. Additionally, the operations of a method or algorithm may reside as one or any combination or set of codes and/or instructions on a non-transitory processor-readable medium and/or computer-readable medium, which may be incorporated into a computer program product.

The preceding description of the disclosed embodiments is provided to enable any person skilled in the art to make or use the present invention. Various modifications to these embodiments will be readily apparent to those skilled in the art, and the generic principles defined herein may be applied to other embodiments without departing from the spirit or scope of the invention. Thus, the present invention is not intended to be limited to the embodiments shown herein but is to be accorded the widest scope consistent with the following claims and the principles and novel features disclosed herein.

While various aspects and embodiments have been disclosed, other aspects and embodiments are contemplated. The various aspects and embodiments disclosed are for purposes of illustration and are not intended to be limiting, with the true scope and spirit being indicated by the following claims.

## Claims

1. A method comprising:
obtaining, by a processor, input data having a number of bits according to a first precision and including one or more tokens;
determining, by the processor, a second precision as a level of precision for input to a next computation operation of a neural network architecture;
for each particular token of the one or more tokens of the input data:
generating, by the processor, a token scale factor based on a range of values associated with the token; and
executing, by the processor, a quantization operation on the token of the input data using the token scale factor to update the token of the input data from the first precision to a quantized token having the second precision for the level of precision for the next computation operation; and
generating, by the processor, output data by executing the next computation operation using each quantized token having the number of bits according to the second precision.

2. The method of claim 1, further comprising
generating, by the processor, a channel scale factor for each channel of one or more channels of a tensor; and
for each channel of the tensor, applying, by the processor, the channel scale factor according to the second precision.

3. The method of claim 2, further comprising, for each channel of the one or more channels of the tensor:
determining, by the processor, a maximum absolute value amongst a plurality of values of the input data in the channel; and
determining, by the processor, the channel scale factor based upon a range of values amongst the plurality of values of the input data in the channel using the maximum absolute value of the input data in the channel.

4. The method of one of the preceding claims, further comprising determining, by the processor, the level of precision for the input data based on at least one of: a signal-to-noise ratio of the input data, a loss function associated with a training process of the neural network architecture, or a computational constraint of a hardware accelerator.

5. The method of one of the preceding claims, further comprising:
extracting, by the processor, the one or more tokens from the input data.

6. The method of one of the preceding claims, further comprising, during a training phase of the neural network architecture:
obtaining, by the processor, a training data having the first precision;
executing, by the processor, the quantization operation on the training data according to the second precision to update the number of bits of the training data from the first precision to the second precision;
generating, by the processor, predicted output data of the next computation operation based upon the training data, by executing the next computation operation using the training data having the number of bits according to the second precision; and
updating, by the processor, one or more parameters of the neural network architecture having the next computation operation based on a loss value between the predicted output data and a training label associated with the training data.

7. The method of one of the preceding claims, wherein the processor executes the next computation operation using an accelerator including at least one of an integer multiply-accumulate (MAC) unit or a single instruction multiple data (SIMD) processor.

8. The method of one of the preceding claims, further comprising:
generating, by the processor, a plurality of data blocks from the input data based upon a tiling configuration of a tensor along one or more dimensions of the tensor, each data block of the input data includes a subset of values within the tensor defined along the one or more dimensions of the tensor; and
for each data block of the plurality of data blocks, applying, by the processor, a block scale factor to the data block based upon a range of values amongst the subset of values of the data block according to the second precision.

9. The method of claim 8, further comprising, for each data block of the plurality data blocks:
determining, by the processor, a maximum absolute value amongst the subset of values of the input data in the data block; and
determining, by the processor, the block scale factor based upon the range of values amongst the subset of values of the input data in the data block using the maximum absolute value of the data block.

10. The method of one of the preceding claims, further comprising storing, by the processor, each token scale factor into a non-transitory machine-readable storage.

11. A system comprising:
a processor configured to perform the method of one of the preceding claims.
